Europäisches Patentamt

European Patent Office

Office européen des brevets

(19)

(11) Veröffentlichungsnummer: **0 245 573**

A1

(12) **EUROPÄISCHE PATENTANMELDUNG**

(21) Anmeldenummer: 86730148.3

(22) Anmeldetag: 23.09.86

(51) Int. Cl.³: **C 10 G 47/34**

(30) Priorität: 04.04.86 CH 1334/86

(43) Veröffentlichungstag der Anmeldung:
19.11.87 Patentblatt 87/47

(84) Benannte Vertragsstaaten:
AT BE DE FR GB IT LU NL SE

(71) Anmelder: Calmar Saoedi Inc. NV.

Curaçao Nederlandse Antillen(NL)

(72) Erfinder: Malinowski, Zvonko c/o Petar Zorovic
Letzter Hasenpfad 13
D-6000 Frankfurt 70(DE)

(74) Vertreter: Meissner, Peter E., Dipl.-Ing. et al,
Meissner & Meissner Patentanwälte Herbertstrasse 22
D-1000 Berlin 33 Grunewald(DE)

(54) Verfahren zur Herstellung von Kraftstoff für Benzin- und Dieselmotoren aus mineralischem Altöl durch Hydrocracken.

(57) Das von mechanischen Verunreinigungen und Wasser befreite Altöl wird mit Stickstoff- und $C_1$ - $C_5$ Kohlenwasserstoffgas im Volumenverhältnis 1:100 vermischt und bei 350° - 440° C und 20 - 30 bar am oberen Ende eines Reaktors (R1) eingespeist. Der Reaktor ist mit Glaskugeln und einem Keramikmaterial gefüllt, welches 99,5 % $Al_2O_3$ und geringe Mengen Eisen-, Silizium- und Natriumoxyd enthält. Das Verhältnis von pro Stunde durchfliessendem Oelvolumen zum Volumen des Keramik-materials beträgt 0,5 - 4 m³/h/m³. Das erhaltene Produkt wird einer Vakuumdestillation unterworfen.

EP 0 245 573 A1

0245573

Die Erfindung betrifft ein Verfahren gemäß Oberbegriff
des Patentanspruches 1.

Das Problem, mineralisches Altöl in niedrig siedende
Kohlenwasserstoffe umzuwandeln, ist bisher noch ncht
auf wirtschaftlich befriedigende Weise gelöst worden.
Mit dem Hydrocrackverfahren werden hochsiedende Erdölprodukte in Gegenwart von Wasserstoff mit relativ guter
Ausbeute in leichtere Produkte gespalten. Das Verfahren
ist jedoch, wenn man es auf eine unbestimmt zusammengesetzte Mischung aus mineralischen Altölen anwendet,
wenig selektiv und weniger effektiv.

Der Erfindung liegt die Aufgabe zugrunde, ein Verfahren
der eingangs genannten Art anzugeben, das
wirtschaftlich einsetzbar ist, d.h. das mit geringen
Investitionskosten für die erforderliche Produktionsanlage und insbesondere mit geringen Energiekosten
verbunden ist.

Diese Aufgabe wird erfindungsgemäß mit den im
Patentanspruch 1 angegebenen Merkmalen gelöst.

Der mit der Erfindung erzielte Vorteil liegt im
wesentlichen darin, daß aufgrund des Zusammenwirkens
der einzelnen Verfahrensmerkmale eine sehr wirtschaftliche Arbeitsweise des Verfahrens erreicht wird.

Ein Beispiel für das Verfahren wird nachstehend gegeben
und anhand einer Zeichnung erläutert, die eine schematische Darstellung einer zur Durchführung des
Verfahrens geeigneten Anlage zeigt.

Ein von mechanischen Verunreinigungen und Wasser befreites mineralisches Altölgemisch wird aus einem Behälter V-1 mittels einer Pumpe über einen Wärmetauscher E-1, der der Vorwärmung dient, und einen Vorerhitzer F-1 einem Reaktor R-1 zugeführt. Vor Eintritt in den Wärmetauscher E-1 wird dem Altöl ein Gemisch aus Stickstoff und $C_1$-$C_5$-Kohlenwasserstoffen beigemischt, wobei der Stickstoff aus einem Behälter V-1 entnommen wird und die $C_1$-$C_5$-Kohlenwasserstoffe als Umlaufgas in der Anlage zur Verfügung stehen.

Der Eintritt des Gemisches aus Altöl und Gas erfolgt am oberen Ende des Reaktors R-1 mit einer Temperatur von 350-440°C, einem Druck von 20-30 bar, einer Raumgeschwindigkeit (LHSV = Liquid Hourly Space Velocity) von 0,5-4 $m^3$/h/$m^3$ und einem Verhältnis $N_2$ und $C_1$-$C_5$/Altöl = 100 $m^3$/$m^3$. Die gesamte Apparatur ist vor Inbetriebnahme mittels Stickstoffspülung von Luft befreit worden. Der Reaktor R-1 ist mit Glaskugeln und mit Keramikmaterial gefüllt. Letzteres hat folgende Zusammensetzung:

| | | |
|---|---|---|
| $Al_2O_3$ | – | 99,5 % |
| $Fe_2O_3$ | – | 0,07 % |
| $SiO_2$ | – | 0,01 % |
| $Na_2O$ | – | 0,06 % |
| Verunreinigungen | – | Rest |

und folgende physikalische Eigenschaften:

| | | |
|---|---|---|
| Oberfläche (surface area) | $m^2 g^{-1}$ | 200 – 400 |
| Porenvolumen (pore volumen) | $cm^3 g^{-1}$ | 0,45 – 0,5 |
| mittlere Länge | mm | 5 |
| Abrieb (abrasion) | % | 2 |

Das aus dem Reaktor R-1 unten austretende Produkt durchläuft dann mehrere Abkühlstufen, nämlich einen Flüssigkeitskühler E-1', einen Dampfgenerator E-2, 3, wo es auf 40° C gekühlt wird, einen luftgekühlten Wärmetauscher E-4 sowie einen Trimm-Kühler E-5, 6 und gelangt schließlich in einen Hochdruck-Seperator V-2, wo der Stickstoff und die $C_1$-$C_2$ Kohlenwasserstoffe abgetrennt und dann zu einem Teil mittels Umlaufgas-Kompressor K-4 in die Anlage zurückgeführt und zum anderen Teil in einen Gasvorratsbehälter geleitet werden. Ebenfalls im Seperator V-2 abgetrenntes Dampfkondensat wird in ein Schmutzwassersystem abgeführt.

Aus dem Hochdruck-Seperator V-2 gelangen die flüssigen Kohlenwasserstofföle unter Herabsetzung des Druckes auf 7 bar in einen Niederdruck-Seperator V-3. Dort abgetrenntes Stickstoff- und $C_1$-$C_5$ Kohlenwasserstoffgas wird in den erwähnten Gasvorratsbehälter geführt.

Aus dem bis hierher durchgeführten Verfahren erhält man 3 - 12 Vol. % $C_1$-$C_5$ Kohlenwasserstoffgas, 28 - 30 Vol. % flüssige Phase (Gasöl - Naphta) mit einem spezifischen Gewicht von 0,821 g/cm$^3$, IBP (Inital Boiling Point) 150° C, EBP (End Boiling Point) = 380 - 420° C.

Die erhaltene flüssige Phase wird dann in bekannter Weise einer Vakuum-Destillation unterzogen. Sie gelangt über einen Wärmetauscher E 7, 8, der der Vorwärmung dient, und einem Vorerhitzer F-2 mit einer Temperatur von 382° C in einen Vakuum-Turm C-1, der am oberen Ende der Kolonne bei einem Druck von 40 mmHg arbeitet. Das Vakuum wird mittels eines zweistufigen Dampfstrahlejektors J-1 erzeugt.

Die Gasölfraktion wird als Seitenfraktion gewonnen und in einen Speichertank abgeführt.

Das gecrackte Bodenprodukt der Vakuumkolonne wird in einem beheizten Öltank T-2 gespeichert. Es dient zu einem Teil zur Erzeugung der in der Anlage, insbesondere der für die Vorerhitzer benötigten Wärmeenergie.

Daten des im Hydrocrackverfahren eingesetzten und erzeugten Produktes:

| | | Altölgemisch | Spaltprodukt |
|---|---|---|---|
| spez. Gewicht bei 15° C | $g/cm^3$ | 0,8981 | 0,8772 |
| Viskosität bei 40° C | $mm^2/sec$ | 94,36 | 20,45 |
| Viskosität bei 100° C | $mm^2/sec$ | 11,38 | 4,29 |

Werte der Vakuumdestillation:

ASTM Vakuumdestillation /° C
(D-11-60)

| IBP | 145° C |
|---|---|
| 5 % | 180 |
| 8 % | 220 |
| 10 % | 250 |
| 17 % | 360 |
| 20 % | 370 |
| 30 % | 410 |
| 40 % | 420 |
| 50 % | 445 |
| 52 % | 460 |
| Rest | 470 |

− 1 −

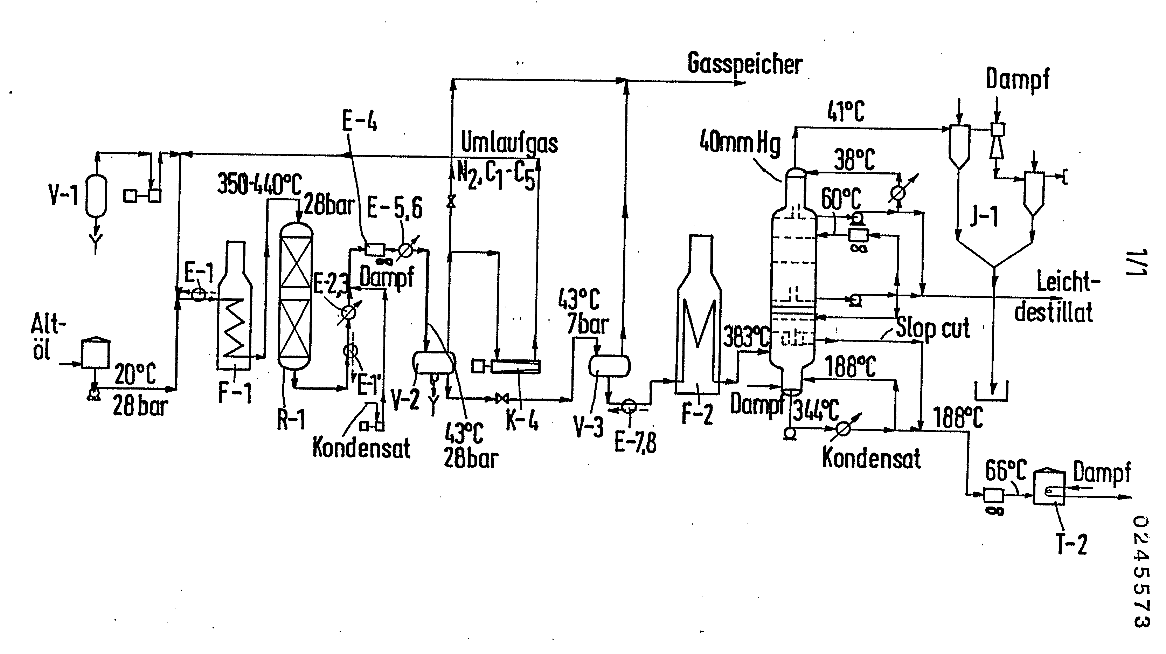

Patentansprüche:

1. Verfahren zur Herstellung von Kraftstoff für Benzin-
und Dieselmotoren aus mineralischem Altöl durch Hydrocracken

g e k e n n z e i c h n e t   d u r c h

folgende Verfahrensschritte

a) ein von mechanischen Verunreinigungen und Wasser
befreites Altölgemisch wird unter vorheriger Vermischung mit Stickstoff- und $C_1$ - $C_5$ Kohlenwasserstoffgas
im Verhältnis von 100 $m^3$ Gas zu 1 $m^3$ Altöl bei einer
Temperatur von 350 - 440° C und einem Druck von 20 - 30
bar am oberen Endes eines Reaktors eingeleitet, der mit
Glaskugeln und Keramikmaterial gefüllt ist, wobei
letzteres sich aus

| | |
|---|---|
| 99,5 % | $Al_2O_3$ |
| 0,07% | $Fe_2O_3$ |
| 0,01% | $SiO_2$ |
| 0,06% | $Na_2O$ |
| Rest | Verunreinigungen |

zusammensetzt und wobei die Raumgeschwindigkeit, d.h.

− 2 −

das Verhältnis von flüssigem Ölvolumen pro Stunde zum Volumen des als Katalysator wirkenden Keramikmaterials $0,5 - 4$ m$^3$/h/m$^3$ beträgt,

b) das anfallende Crackprodukt wird einer an sich bekannten Vakuumdestillation unterzogen.

2. Verfahren nach Anspruch 1,
d a d u r c h   g e k e n n z e i c h n e t,
daß das als Katalysator wirkende Keramikmaterial folgende physikalische Eigenschaften aufweist:

| | | |
|---|---|---|
| Oberfläche | $200 - 400$ | m$^2$g$^{-1}$ |
| Porenvolumen | $0,45 - 0,5$ | cm$^3$g$^{-1}$ |
| mittlere Länge | 5 | mm |
| Abrieb | 2 | % |

Gasspeicher

E-4

Umlaufgas
$N_2, C_1-C_5$

Dampf

40 mm Hg

41°C

38°C

60°C

J-1

V-1

350-440°C

28 bar

E-5,6

E-2,3

E-1

Dampf

E-1'

Alt-öl

20°C

28 bar

F-1

R-1

Kondensat

V-2

43°C
28 bar

K-4

43°C
7 bar

V-3

E-7,8

F-2

383°C

Dampf

344°C

188°C

Slop cut

Leicht-destillat

188°C

Kondensat

66°C

Dampf

T-2

1/1

0245573

0245573

EUROPÄISCHER RECHERCHENBERICHT

Nummer der Anmeldung

## EINSCHLÄGIGE DOKUMENTE

EP 86730148.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DD – A – 80 503 (FIEDLER, LORENZ, PUCHER, STAEGE)<br><br>* Ansprüche; Beispiele *<br><br>-- | 1 | C 10 G 47/34 |
| A | DD – A – 26 871 (RIEDEL, TIEROFF)<br><br>* Ansprüche *<br><br>-- | 1 | |
| A | DE – A1 – 3 434 819 (JUSHITSUYU TAISAKU GIJUTSU KENKYU KUMIAI)<br><br>* Ansprüche; Zusammenfassung *<br><br>-- | 1 | |
| A | FR – A – 1 077 053 (ANGLO-IRANIAN OIL COMPANY LIMITED)<br><br>* Ansprüche *<br><br>---- | 1 | |

RECHERCHIERTE SACHGEBIETE (Int. Cl.4)

C 10 G 47/00
C 10 G 9/00

Der vorliegende Recherchenbericht wurde für alle Patentansprüche erstellt.

| Recherchenort | Abschlußdatum der Recherche | Prüfer |
|---|---|---|
| WIEN | 02-09-1987 | STÖCKLMAYER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82